Europäisches Patentamt

(19) European Patent Office

Office européen des brevets

(11) Numéro de publication: **0 007 849**
A1

## DEMANDE DE BREVET EUROPEEN

(21) Numéro de dépôt: 79400489.5

(22) Date de dépôt: 11.07.79

(51) Int. Cl.³: **B 60 R 1/06**

(30) Priorité: 18.07.78 FR 7821303
20.12.78 FR 7835837

(43) Date de publication de la demande:
06.02.80 Bulletin 80/3

(84) Etats Contractants Désignés:
DE GB IT SE

(71) Demandeur: Société Anonyme dite : Manzoni-Bouchot
Zone Industrielle "Le Plan d'Acier" Boîte Postale No 9
F-39200 Saint-Claude(FR)

(72) Inventeur: Manzoni, Stéphane
1, rue Pasteur
F-39200 Saint-Claude(FR)

(74) Mandataire: Moulines, Pierre et al,
Cabinet BEAU de LOMENIE 55, rue d'Amsterdam
F-75008 Paris(FR)

(54) Dispositif de commande à distance pour rétroviseur extérieur réglable de l'intérieur d'un véhicule.

(57) Dispositif de commande à distance pour rétroviseur réglable de l'intérieur du véhicule au moyen d'une transmission à câbles, comprenant un corps dans lequel les câbles sont guidés parallèlement à l'axe longitudinal dudit corps.

Le corps 1 est fixé sur la portière du véhicule avec son axe longitudinal $XX_1$ parallèle à l'axe longitudinal du véhicule et l'organe hémisphérique de commande 8 est solidaire d'un levier de manoeuvre 14 perpendiculaire à l'axe dudit organe hémisphérique 8 et s'étendant à l'intérieur du véhicule perpendiculaire à l'axe longitudinal du corps 1 lorsque l'organe hémisphérique est en position neutre, ledit corps présentant des ouvertures 16, 17, 17a dont les bords assurent le guidage du levier de manoeuvre et de l'organe hémisphérique de commande.

L'invention est utilisée pour la command à distance de rétroviseurs.

(Figure 1)

FIG.1

EP 0 007 849 A1

Dispositif de commande à distance pour rétroviseur extérieur.

Pour la commande à distance d'un rétroviseur extérieur à partir de l'intérieur d'un véhicule, il est connu d'utiliser des dispositifs tels que celui ayant fait l'objet du brevet des ETATS-UNIS d'Amérique n° 2.931.245 dans lequel le miroir est monté pivotant dans un boîtier au moyen d'une articulation à rotule reliée par trois câbles de transmission à un moyen de commande constitué par une articulation à rotule munie d'un levier de commande. Le dispositif de commande qui est monté en général, sur le panneau de portière du véhicule est disposé de telle sorte que dans sa position neutre ou point moyen, le levier de commande a son axe parallèle aux câbles de transmission à leur sortie du dispositif et perpendiculaire ou sensiblement perpendiculaire à la vitre.

Or, dans les véhicules de grandes dimensions, les profils de portières présentent une épaisseur importante qui permet le montage de ce dispositif de commande sur le panneau de portière sans difficulté. Tourefois, dans les véhicules de dimensions courantes, le profil de portière présente une épaisseur plus faible et il est pratiquement impossible du fait de l'encombrement en longueur du dispositif de commande, de monter ce genre de dispositif sur le panneau de portière en raison de la position des câbles de transmission à leur sortie du dispositif et qui viennent buter contre la vitre de la portière.

Pour échapper à cette contrainte, et réduire l'encombrement du dispositif de commande dans la partie intérieure de la portière, soit entre le panneau intérieur de celle-ci et la vitre, ou entre la vitre ou la cloison intériuere, on a réalisé des dispo- tifs de commande qui sont décrits notamment dans les brevets des ETATS-UNIS d'Amérique n° 3.552.228 - 3.719.105 et 3.858.608.

Ces dispositifs de commande sont montés sur le panneau de portière de telle sorte que l'axe du levier de manoeuvre soit toujours perpendiculaire à la vitre quand il se trouve en position neutre ou au point moyen, alors que l'axe des organes de transmission à leur sortie du dispositif est parallèle à la vitre.

Dans ce but les câbles qui sont fixés à la rotule solidaire du levier de manoeuvre subissent dans le corps du dispositif de commande, un changement de direction suivant un angle sensiblement égal à 90°.

Toutefois, un tel changement de direction des câbles entraîne des frictions nuisibles dans la transmission qui nécessite une augmentation de l'effort de manoeuvre par rapport à la commande directe mentionnée ci-dessus. Il peut en résulter également une usure plus rapide des câbles dans leur gaine.

Conformément à la présente invention on utilise un dispositif de commande à distance pour rétroviseur extérieur réglable de l'intérieur du véhicule au moyen d'une transmission à câbles, comprenant un corps dans lequel les câbles sont guidés parallèlement à l'axe longitudinal dudit corps qui présente un logement sphérique contre lequel est en appui un organe hémisphérique de commande qui est solidaire de l'une des extrémités des câbles, caractérisé en ce que le corps est fixé sur la portière du véhicule avec son axe longitudinal parallèle à l'axe longitudinal du véhicule et en ce que l'organe hémisphérique de commande est solidaire d'un levier de manoeuvre perpendiculaire à l'axe dudit organe hémisphérique et s'étendant à l'intérieur du véhicule perpendiculairement à l'axe longitudinal du corps lorsque l'organe hémisphérique est en position neutre, ledit corps présentant des ouvertures dont les bords assurent le guidage du levier de manoeuvre et de l'organe hémisphérique de commande.

Cette disposition permet d'utiliser un levier de manoeuvre dont l'axe est perpendiculaire à la vitre lorsque l'organe sphérique de commande est au point neutre et de disposer l'axe des câbles de transmission à leur sortie du dispositif parallèlement à la vitre.

Par contre, les câbles de transmission sont montés directement sur la rotule comme dans le brevet des ETATS-UNIS d'Amérique n° 2.931.245, sans nécessiter un changement de direction préjudiciable.

Suivant une caractéristique de l'invention, l'organe hémisphérique de commande présente dans sa partie sphérique, une cavité tronconique de section quadrangulaire dans laquelle est engagée l'une des extrémités de la tige centrale fixée sur le corps, de telle sorte que l'organe hémisphérique et par suite, le miroir sont guidés suivant un mouvement quadrangulaire.

Cette disposition permet d'obtenir un déplacement du miroir suivant une trajectoire quadrangulaire.

Or, aucun des dispositifs connus ne permet d'obtenir une telle trajectoire de guidage.

Suivant une autre caractéristique de l'invention le corps présente une rainure dont l'axe est parallèle à l'axe longitudinal dudit corps et dans lequel est monté coulissant et pivotant autour de son axe, le levier de manoeuvre solidaire de l'organe hémisphérique de commande.

Or, on a constaté qu'il est possible d'obtenir le même fonctionnement du levier de manoeuvre au moyen d'un guidage longitudinal du levier situé non pas dans le corps, mais dans le flasque enjoliveur fixé sur le corps et reposant sur la garniture intérieure

4

de portière.

Suivant une autre caractéristique, il est prévu sur le levier une couronne dentée, calée sur ce dernier et qui engrène avec des pignons satellites qui sont entraînés en rotation par un pignon planétaire solidaire d'un bouton de manoeuvre à l'intérieur duquel est monté un porte-satellite qui est solidaire de l'organe enjoliveur. Cette disposition a pour but de démultiplier la commande en rotation du bouton de manoeuvre actionnant le levier de manoeuvre et d'obtenir une commande nécessitant une force beaucoup plus faible pour l'actionnement du bouton de manoeuvre et un réglage plus précis du miroir.

D'autres caractéristiques et avantages de l'invention, seront mieux compris à la lecture de la description qui va suivre de plusieurs exemples de réalisation et en se référant aux dessins annexés dans lesquels :

- La figure 1 est une vue en plan d'un mode de réalisation du dispositif de commande à distance pour retroviseur suivant l'invention ;

- La figure 2 est une vue en plan suivant la ligne II-II de la figure 1 ;

- La figure 3 est une vue en plan et en coupe suivant la ligne III-III de la figure 2 ;

- La figure 4 est une vue en élévation suivant la flèche F de la figure 3 ;

- La figure 5 est une vue de la butée démontée suivant la flèche F de la figure 3 ;

- La figure 6 est une vue de l'organe hémisphérique de commande démonté suivant la flèche F de la figure 3 ;

-La figure 7 est une vue du corps suivant la flèche F de la figure 3 ;

- La figure 8 est une vue en perspective du corps ;

- Les figures 9 <u>a</u> à 9 <u>d</u> sont des vues des différentes positions de l'organe hémisphérique de commande ;

- La figure 10 est une vue en plan d'une variante de montage du dispositif de commande ;

- La figure 11 est une vue en plan d'un autre mode de réalisation du dispositif de commande suivant l'invention ;

- La figure 12 est une vue en plan et en coupe suivant la ligne XII-XII de la figure 11 ;

- La figure 13 est une vue en élévation suivant la flèche F1 de la figure 12 ;

- La figure 14 est une vue en élévation du corps suivant la flèche F1 de la figure 12 ;

- La figure 15 est une vue en plan du dispositif montrant la rotation de la tige de commande.

- La figure 16 est une vue en plan d'une variante de réalisation du dispositif représenté à la figure 11 ;

- La figure 17 est une vue en élévation de face d'un autre mode de réalisation du dispositif de commande ;

- La figure 18 est une vue en coupe suivant la ligne XVIII-XVIII de la figure 17 ;

- La figure 19 est une vue en coupe suivant la ligne XIX-XIX de la figure 18 ;

- La figure 20 est une vue en coupe suivant la ligne XX-XX de la figure 21 d'un autre mode de réalisation du dispositif de commande ;

- La figure 21 est une vue en coupe suivant la ligne XXI-XXI de la figure 20.

- La figure 22 est une vue en coupe suivant la ligne XXII-XXII de la figure 20.

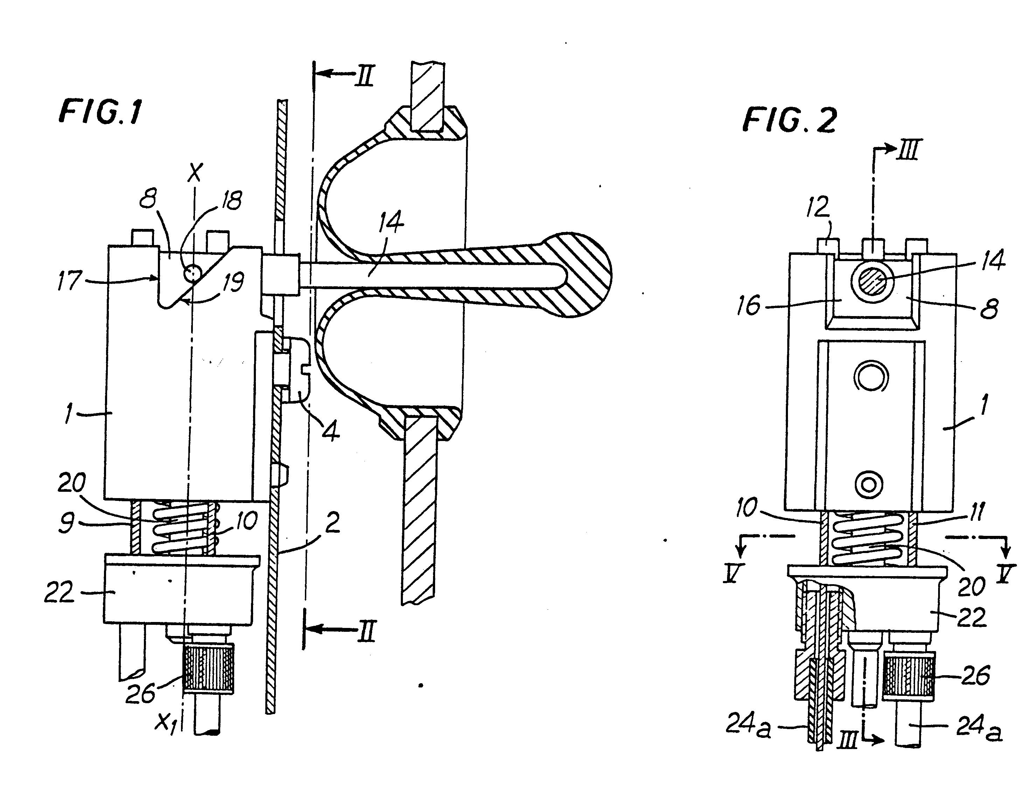

Le dispositif de commande suivant l'invention représenté aux figures 1 à 4 est destiné à assurer la commande à distance d'un miroir non représenté,

6

monté pivotant dans un boîtier au moyen d'une articulation à rotule ou autre, reliée par trois câbles de transmission audit dispositif de commande.

La partie correspondant au montage du miroir dans son boîtier qui est bien connu, ne sera pas décrite, ni représentée, mais il sera fait mention au cours de la description de la position du miroir qui peut se déplacer suivant une orientation "ciel-terre" ou suivant une orientation "gauche-droite", ces orientations correspondant à des déplacements correspondants du levier de commande du dispositif de commande.

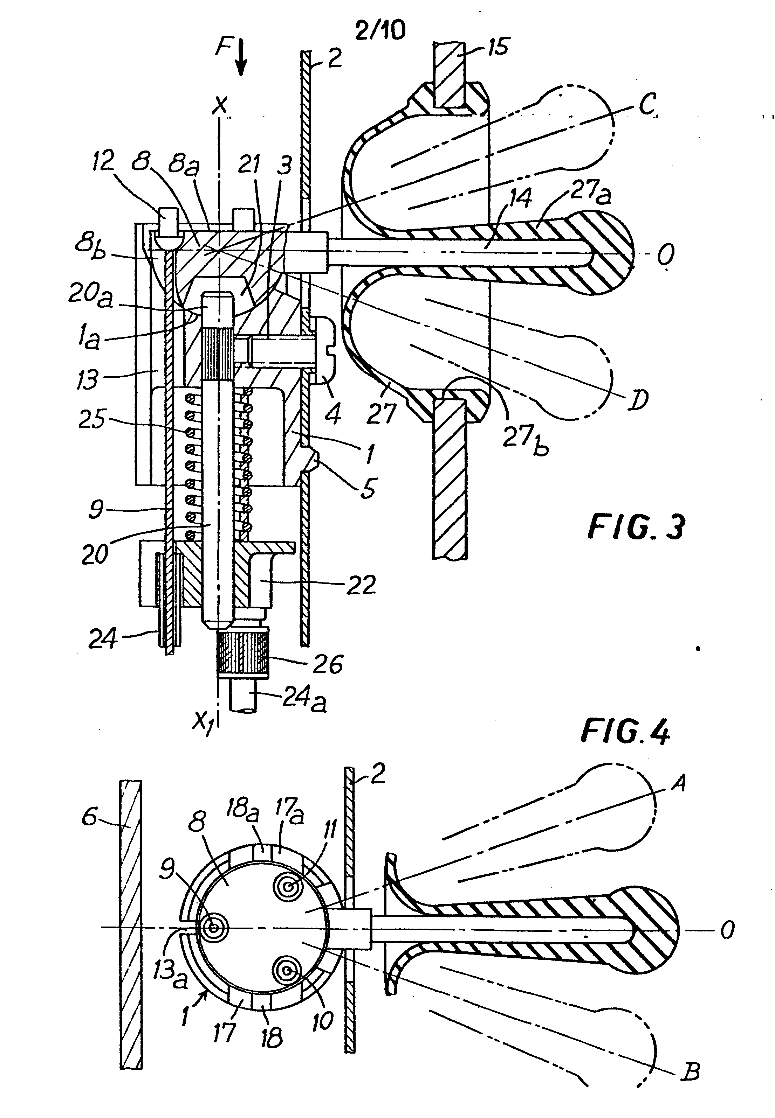

Aux figures 1 à 4, on a représenté un mode de réalisation du dispositif de commande qui comprend un corps 1 cylindrique, fixé sur une tôle de cloison intérieure de portière 2 au moyen d'une partie méplate présentant un trou taraudé 3 dans lequel est engagée une vis de fixation 4 sur la tôle 2 qui présente un trou dans lequel est engagé un téton 5 d'indexage ménagé dans le corps 1, de telle sorte que le corps 1 soit disposé entre la vitre 6 (figure 4) et la tôle 2 avec son axe longitudinal $XX_1$ parallèle à l'axe du véhicule dont les roues reposent sur le sol 7.

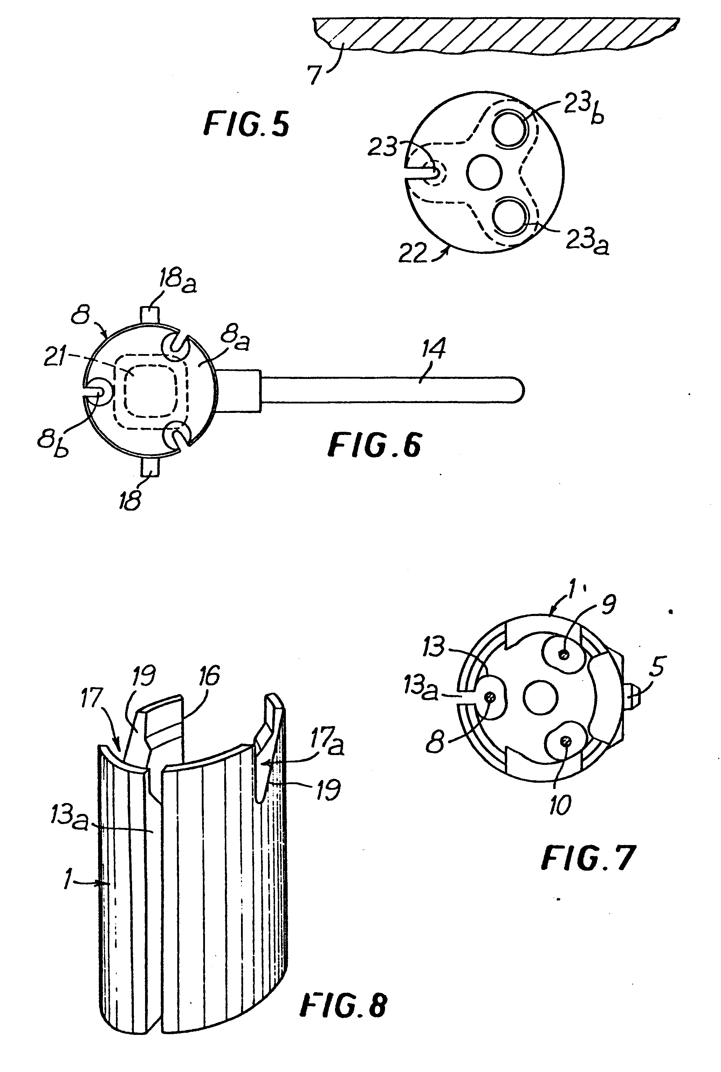

Le corps 1 présente à l'une de ses extrémités, un logement sphérique 1a (figure 3) dans lequel est monté oscillant, un organe hémisphérique de commande 8 (figures 3 et 6) qui présente une face plane 8a comportant des fentes 8 b dans lesquelles sont engagés des câbles de transmission 9, 10, 11 qui sont munis à l'une de leurs extrémités, de bossages 12 qui sont en appui contre la face plane 8a de l'organe de commande 8 et qui sont reliés à leur autre extrémité au moyen de pivotement du miroir non représenté au dessin.

Les câbles 8, 9, 10 sont disposés parallèlement à l'axe $XX_1$ du corps dans des conduits de passage 13 dont au moins l'un présente une fente 13a en communication avec l'extérieur.

Perpendiculairement à l'axe de l'organe hémisphérique de commande 8, est fixé sur ce dernier un levier de manoeuvre 14 qui s'étend à l'intérieur du véhicule au-delà de la garniture 15 de portière suivant une direction perpendiculaire à l'axe $XX_1$ du corps lorsque l'organe hémisphérique de commande 8 est en position neutre O, c'est-à-dire lorsque son axe est confondu avec l'axe $XX_1$. Le levier de manoeuvre 14 s'étend à l'extérieur du corps 1 par une ouverture 16 de forme quadrangulaire.

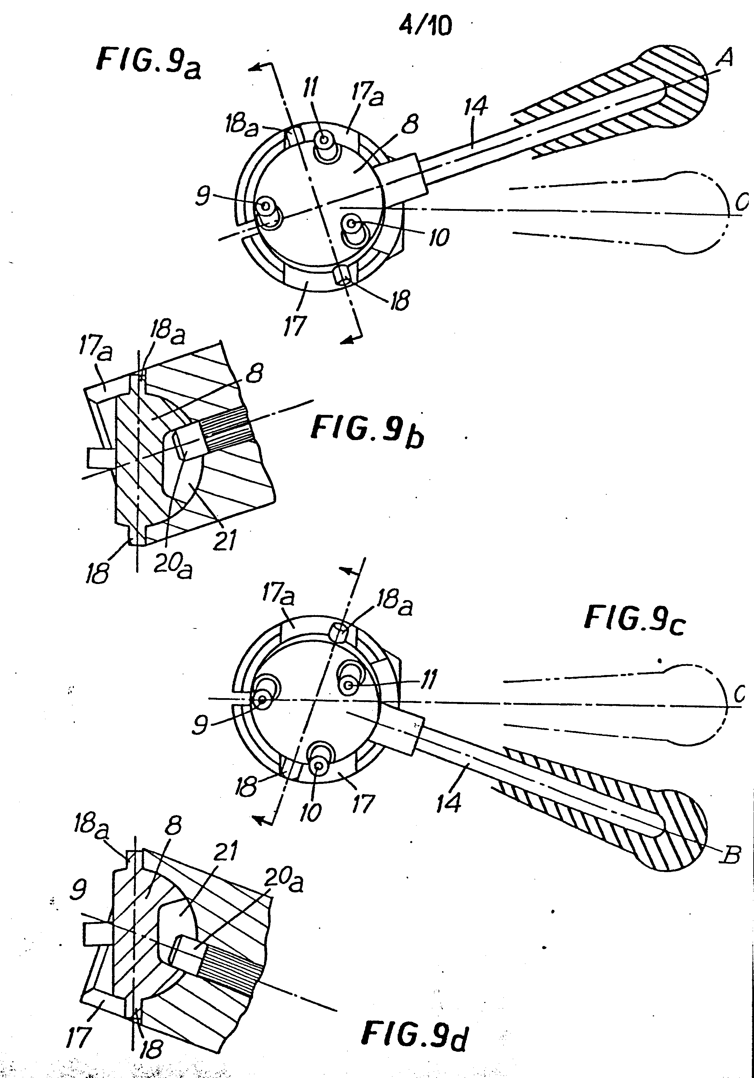

De part et d'autre de ladite ouverture 16 sont prévues deux ouvertures 17, 17a (figure 8) diamétralement opposées dans lesquelles se déplacent des ergots 18, 18a solidaires de l'organe hémisphérique 8 contre des rampes hélicoïdales 19 desdites ouvertures transformant ainsi, le mouvement rectiligne du levier 14 en un mouvement de pivotement de l'organe sphérique 8 comme représenté aux figures 9a à 9d.

Coaxialement à l'axe $XX_1$ est fixée dans le corps 1, une tige 20 dont l'une des extrémités 20a s'étend à l'intérieur d'une cavité tronconique 21 de section quadrangulaire ménagée dans la partie sphérique de l'organe hémisphérique, de telle sorte que l'organe hémisphérique et par suite, le miroir soient guidés suivant une trajectoire quadrangulaire.

Sur la tige 20 du côté opposé à l'organe hémisphérique 8, est montée coulissante une rondelle de butée 22 (figures 1, 2, 3 et 5) qui présente des ouvertures 23 pour le passage libre des câbles 9, 10, 11 dont les gaines 24 sont en appui sur ladite rondelle de butée 22 contre l'action d'un ressort 25 disposé autour de la tige 20 et en appui respectivement contre le corps 1 et contre la rondelle 22. Cette disposition permet d'assurer la tension sur chaque câble et le freinage de l'organe hémisphérique 8 dans son logement 1a.

Un montage spécial est prévu pour les câbles 10 et 11 afin de permettre ᴧé réglage de leur tension et à cet effet, il est prévu dans la rondelle 22, des trous taraudés 23 a, 23b dans lesquels sont vissés des manchons 26 permettant le libre passage des câbles 10, 11 et contre lesquels sont en appui les gaines 24a desdits câbles.

Entre le panneau de portière 15 et le dispositif de commande, il est prévu un soufflet 27 en matière élastique dont la partie centrale est prolongée par une partie tubulaire 27a assurant le recouvrement du levier de manoeuvre 14 s'étendant à l'intérieur du véhicule et dont le bord périphérique présente une rainure 27b dans laquelle est engagé le bord du panneau de portière 15.

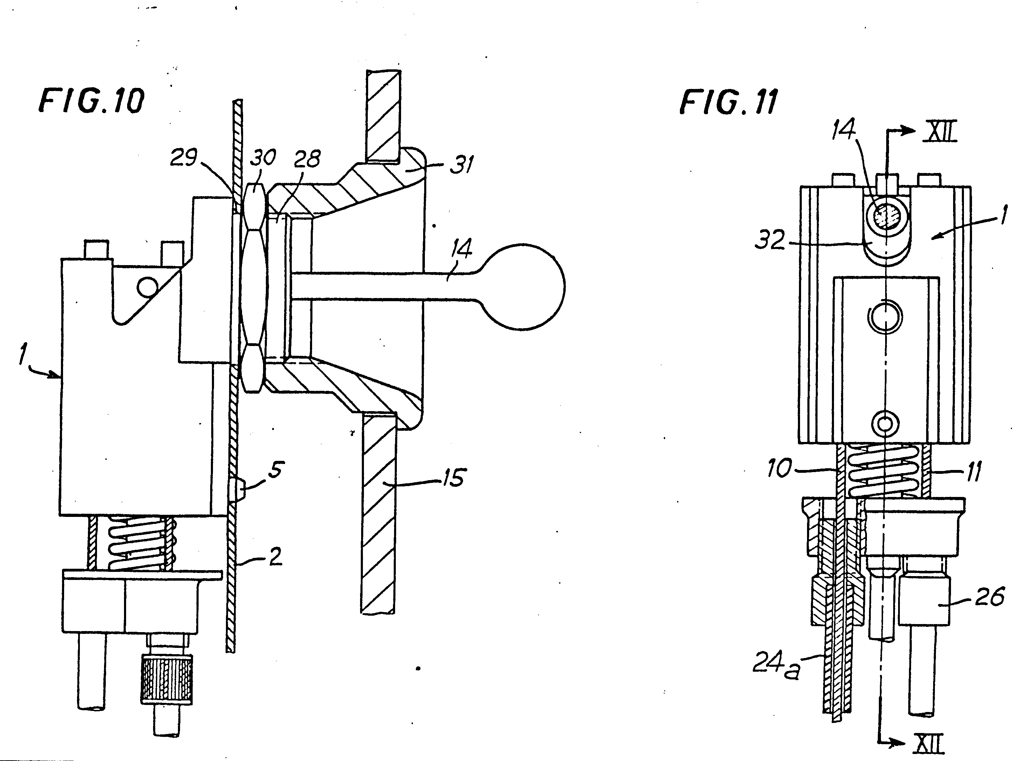

A la figure 10 on a représenté une variante de montage du corps 1 sur le panneau 2 dans laquelle la vis 4 a été remplacée par un prolongement tubulaire 28 du corps 1 dans lequel est engagé le levier 14 de manoeuvre, ledit prolongement 28 étant monté dans un trou 29 de la tôle de cloison deportière 2 sur laquelle est fixé le corps 1 au moyen d'un écrou 30 vissé sur une partie filetée du prolongement tubulaire 28. Un organe de protection enjoliveur 31 disposé entre le panneau de garniture 15 et le dispositif de commande est vissé sur la partie filetée du prolongement tubulaire 28.

Le dispositif de commande suivant l'invention fonctionne de la manière suivante :

Pour obtenir le déplacement "ciel-terre" du miroir, on agit sur le levier 14 qui se trouve initialement dans la position neutre O (figures 4 et 9a à 9d) pour amener celui-ci dans la position A ou dans la position B.

Lors de ce déplacement vertical rectiligne du levier 14, l'organe hémisphérique de commande 8 est guidé au moyen des ergots radiaux 18, 18a qui sont en contact avec des rampes hélicoïdales 19 des ouvertures 17, 17a du corps 1. Il en résulte une transformation du mouvement rectiligne du levier 14 en mouvement de rotation de l'organe de commande 8 qui agit sur les câbles 10 et 11 reliés au support de miroir, afin de solliciter celui-ci, suivant un mouvement "ciel-terre".

Pour obtenir le déplacement "gauche-droite" du miroir, on agit sur le levier 14 qui se trouve initialement dans la position neutre O (figure 3) pour amener celui-ci dans la position C ou dans la position D. Lors de ce déplacement rectiligne, horizontal du levier on obtient un pivotement de l'organe de commande 8 autour de l'axe perpendiculaire à l'axe $XX_1$, c'est à dire suivant l'axe des ergots radiaux 18, 18a. Il en résulte une action sur les câbles 9, 10, 11 qui sont reliés au support de miroir afin de solliciter celui-ci suivant un mouvement "gauche-droite". Le déplacement de l'organe de commande hémisphérique 6 est délimité dans les deux cas par l'action de la tige 20 sur les faces du logement tronconique 21 qui permet d'obtenir une trajectoire carrée ou quadrangulaire de l'organe 8 et du miroir.

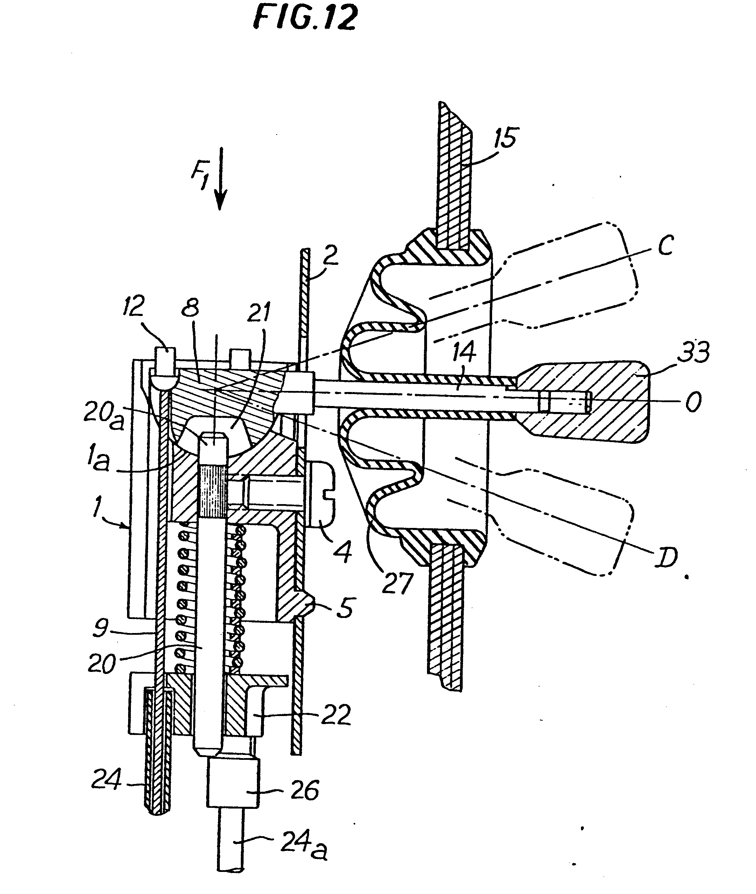

Aux figures 11 à 15, on a représenté une variante de réalisation du dispositif de commande du miroir de rétroviseur suivant l'invention qui est disposé de la même manière et qui est composé des mêmes organes que celui décrit précédemment. Toutefois, le guidage de l'organe hémisphérique dans le corps a été modifié du fait que les ergots 18, 18a ont été supprimés ainsi que les ouvertures 17, 17a dans le corps 1.

Dans ce cas, il est prévu dans le corps 1 une rainure ou fente 32 dont l'axe est parallèle à l'axe longitudinal $XX_1$ dudit corps et dans laquelle est monté coulissant et pivotant autour de son axe le levier 14 qui comporte à son extrémité, un bouton 33 à section quadrangulaire pour faciliter la préhension en rotation.

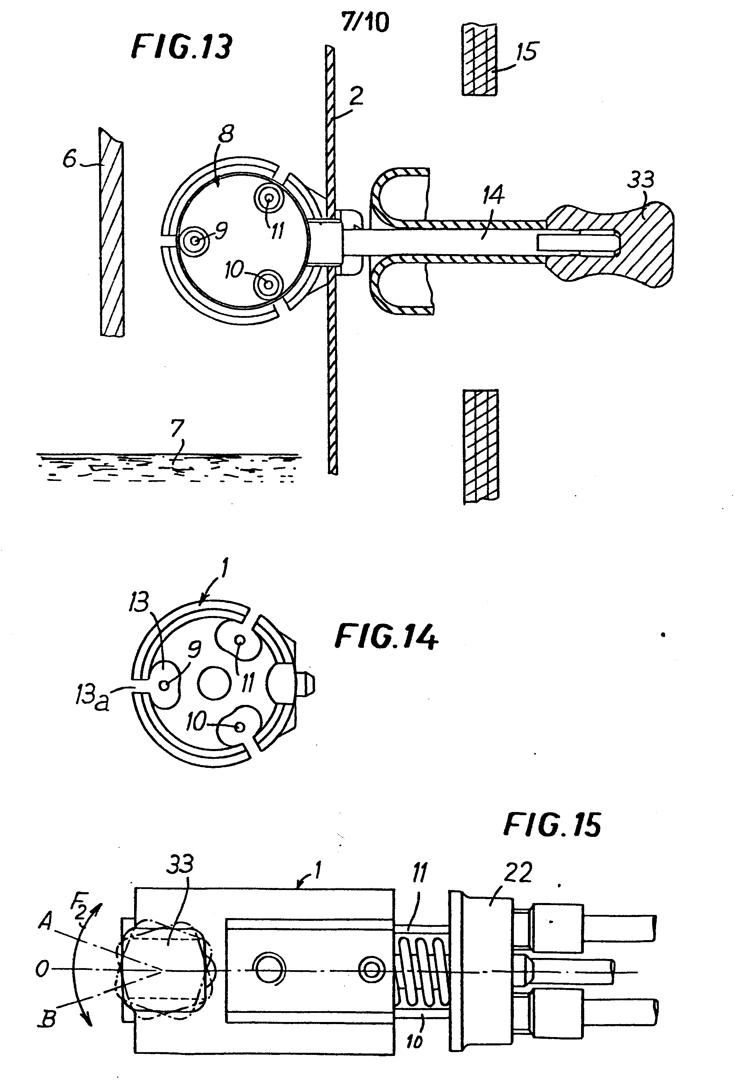

Ainsi qu'il est représenté à la figure 14, les conduits de passage 13 des câbles 9, 10, 11 dans le corps présentent tous les trois, une fente 13a permettant l'introduction des câbles dans leurs conduits.

Dans ce mode de réalisation, le guidage de l'organe hémisphérique 8 est réalisé uniquement à partir de la rainure 32 prévue dans le corps.

Pour obtenir le déplacement "ciel-terre" du miroir, on agit sur le bouton 33 du levier 14 qui se trouve initialement dans la position neutre O pour amener ledit bouton 33 dans la position A ou dans la position B par rotation suivant la double flèche F2 autour de l'axe du levier 14.

Lors de ce déplacement par rotation du levier 14, l'organe hémisphérique 8 agit sur les câbles 10 et 11 reliés au support de miroir, afin de solliciter celui-ci suivant un mouvement "ciel-terre".

Pour obtenir le déplacement "gauche-droite" du miroir, on agit sur le bouton du levier 14 qui se trouve initialement dans la position neutre O (figure 12) pour amener celui-ci dans la position C ou dans la position D. Lors de ce déplacement rectiligne, horizontal du levier 14 guidé dans la rainure 32, il se produit un pivotement de l'organe de commande 8 suivant un axe perpendiculaire à l'axe $XX_1$ et il en résulte une action sur les câbles 9, 10, 11 qui agissent sur le porte-miroir afin de déplacer celui-ci suivant un mouvement "gauche-droite".

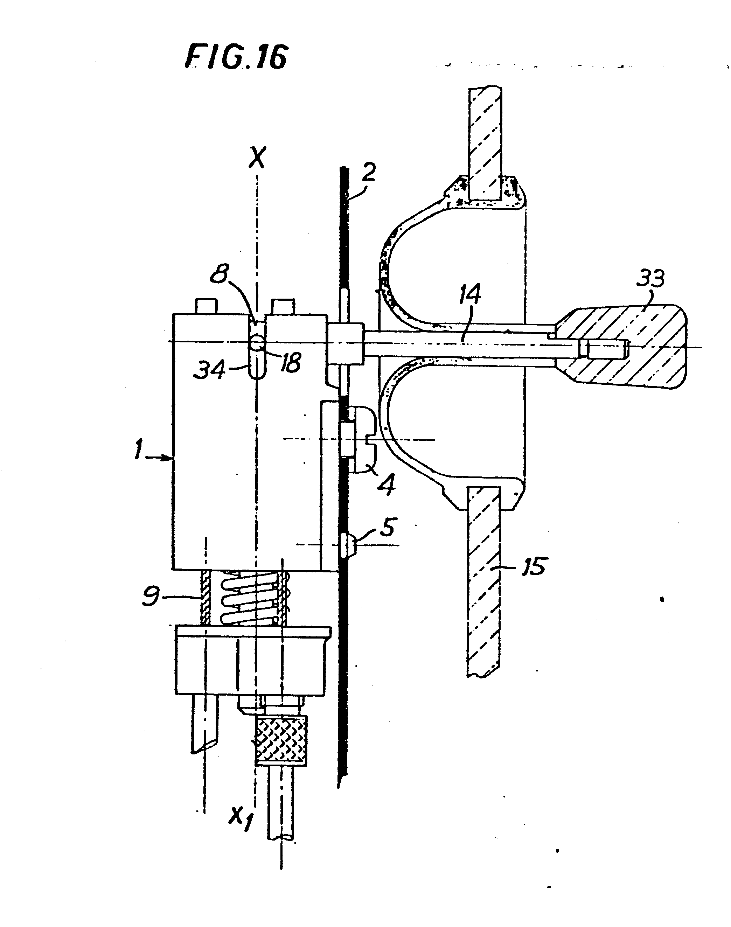

A la figure 16, on a représenté une variante de réalisation du dispositif représenté à la figure 11, dans laquelle l'organe hémisphérique 8 est muni de deux ergots 18, 18a qui sont montés coulissants et pivotants dans des rainures 34 du corps 1 dont les axes sont parallèles à l'axe $XX_1$ dudit corps.

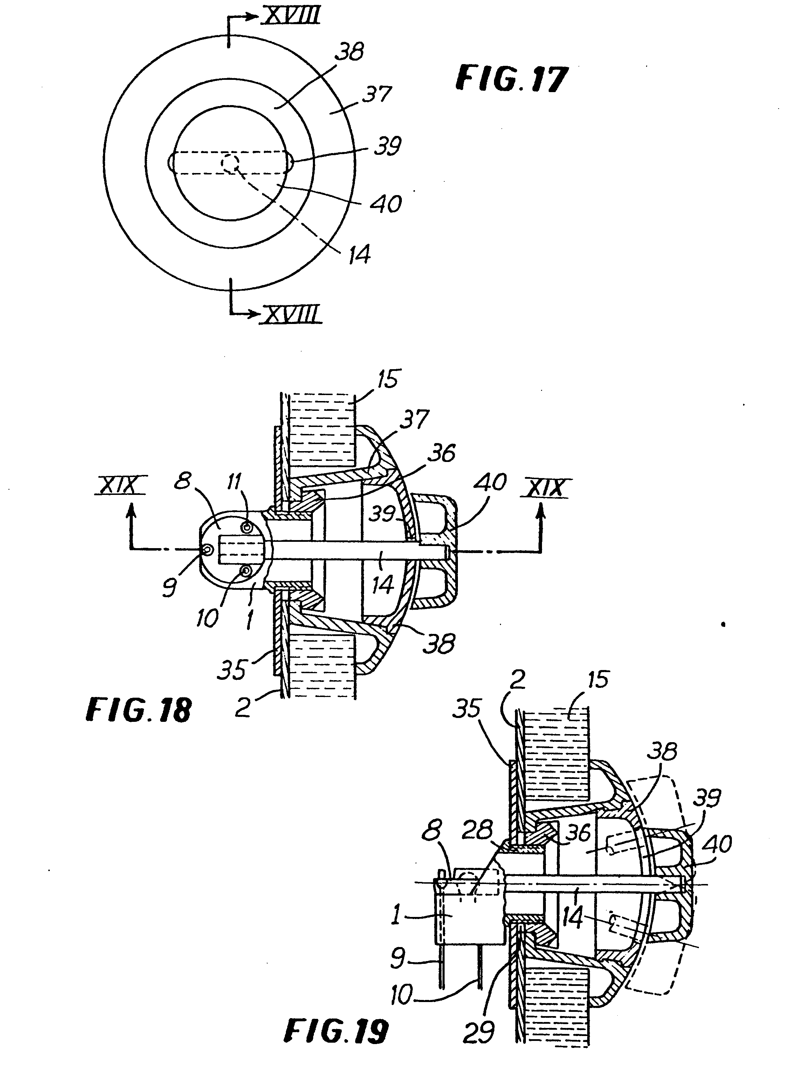

Aux figures 17, 18 et 19, on a représenté un mode de réalisation du dispositif de commande à distance d'un rétroviseur qui est analogue à celui mentionné précédemment et qui comporte un corps 1 présentant un logement hémisphérique dans lequel est monté oscillant, un organe hémisphérique de commande 8 sur lequel sont fixés par l'une de leurs extrémités, des câbles de transmission 9, 10, 11 qui sont reliés à leur autre extrémité au moyen de pivotement du miroir.

Latéralement le corps 1 présente un prolongement 28 qui est engagé dans un trou 29 d'une tôle de cloison de portière 2 avec interposition d'une tôle d'appui 35, ledit prolongement 28 présentant une partie filetée sur laquelle est vissé un écrou 36 qui assure le maintien en butée contre la tôle 2 d'une entretoise 37 qui traverse une garniture 15 de portière et se trouve en appui sur celle-ci.

Sur l'entretoise 37 est fixé un enjoliveur 38 qui est monté notamment par enclipsage et qui présente une rainure 39 dont l'axe est parallèle à l'axe longitudinal du corps 1 et dans lequel est monté coulissant et pivotant autour de son axe, un levier de manoeuvre 14 solidaire à l'une de ses extrémités, de l'organe hémisphérique de commande 8 et dont l'autre extrémité s'étendant à l'extérieur de l'enjoliveur porte un bouton de manoeuvre 40.

Cette disposition permet d'agir sur l'organe hémisphérique de commande en supprimant la rainure sur le corps 1.

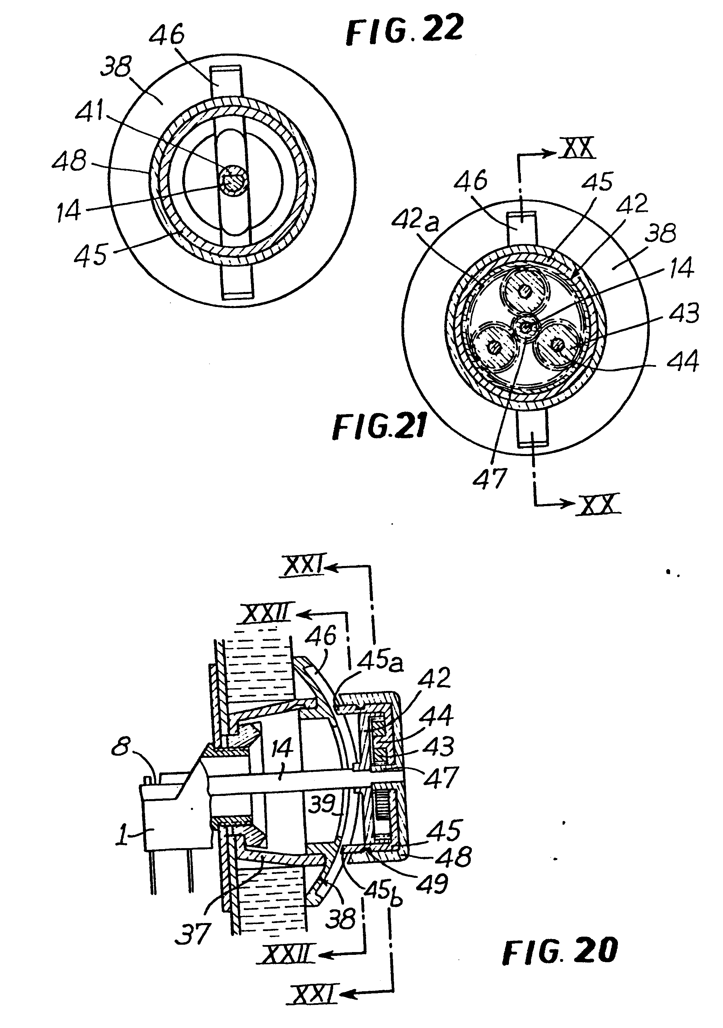

Aux figures 20, 21, 22 on a représenté une variante de réalisation dans laquelle une démultiplication est interposée entre le bouton de manoeuvre et la tige 14 pour faciliter le mouvement de rotation.

A l'une des extrémités de la tige 14 opposée à l'organe hémisphérique 8, il est prévu un méplat 41 sur lequel est engagé une couronne dentée 42 dont la denture intérieure 42a engrène avec des pignons satellites 43 qui sont montés en rotation sur des axes 44 d'un porte-satellite 45 qui comporte deux pattes 45a, 45 b, engagées dans une rainure 46 ménagée sur la face extérieure de l'enjoliveur 38. Cette disposition permet d'immobiliser le porte-satellite 45 par rapport à l'enjoliveur 38.

Les pignons satellites 43 engrènent avec un pignon planétaire ou central 47 qui est solidaire d'un bouton de manoeuvre 48 et qui est monté en rotation libre à l'extrémité de l'axe 14 qui présente une partie cylindrique faisant suite à la partie méplate 41.

Le bouton 48 est maintenu en place au moyen d'une nervure circulaire 49 qui est engagée dans une gorge correspondante prévue sur le porte-satellite 45.

Pour actionner la tige 14 en rotation, on agit sur le bouton de manoeuvre 48 dont le pignon planétaire 47 entraîne, par l'intermédiaire des pignons satellites 43, la couronne dentée 42 solidaire de l'axe 14. Il en résulte une démultiplication entre le bouton de manoeuvre 48 et l'axe 14 qui assure un fonctionnement plus aisé.

Bien entendu, diverses modifications peuvent être apportées par l'homme de l'art aux dispositifs ou procédés qui viennent d'être décrits uniquement à titre d'exemples, non limitatifs, sans sortir du cadre de l'invention.

# REVENDICATIONS

1. Dispositif de commande à distance pour rétroviseur extérieur réglable de l'intérieur du véhicu- au moyen d'une transmission à câbles, comprenant un corps dans lequel les câbles sont guidés parallèlement à l'axe longitudinal dudit corps qui présente un loge ment sphérique contre lequel est en appui un organe hémisphérique de commande qui est solidaire de l'une des extrémités des câbles, caractérisé en ce que le corps est fixé sur la portière du véhicule avec son axe longitudinal parralèle à l'axe longitudinal du véhicule et en ce que l'organe hémisphérique de commande est solidaire d'un levier de manoeuvre perpendiculaire à l'axe dudit organe hémisphérique et s'étendant à l'intérieur du véhicule perpendiculairement à l'axe longitudinal du corps lorsque l'organe hémisphérique est en position neutre, ledit corps présentant des ouvertures dont les bords assurent le guidage du levier de manoeuvre et de l'organe hémisphérique de commande.

2. Dispositif de commande suivant la revendication 1, caractérisé en ce que le corps présente deux ouvertures diamétralement opposées présentant des rampes hélicoïdales contre lesquelles se déplacent deux ergots solidaires de l'organe hémisphérique de commande, de telle sorte que le déplacement des ergots contre les bords inclinés communique à l'organe hémisphérique un mouvement rotatif, ledit corps présentant entre les deux premières ouvertures, une troisième ouverture quadrangulaire dans laquelle se déplace le levier de manoeuvre.

3. Dispositif de commande suivant la revendication 1, caractérisé en ce que le corps présente une rainure dont l'axe est parallèle à l'axe longitudinal dudit corps et dans lequel est monté coulissant et pivotant autour de son axe, le levier de manoeuvre solidaire de l'organehémisphérique de commande.

4.　　Dispositif de commande suivant la revendication 1, caractérisé en ce que le corps est muni suivant son axe longitudinal, d'une tige sur laquelle est montée coulissante, une rondelle de butée qui est traversée par les câbles de transmission et contre laquelle sont en appui les gaines desdits cables contre l'action d'un organe élastique disposé entre ladite rondelle et le corps, assurant ainsi la tension sur chaque câble et le freinage de l'organe hémisphérique dans son logement.

5.　　Dispositif de commande suivant l'une quelconque des revendications 1 à 4, caractérisé en ce que l'organe hémisphérique de commande présente dans sa partie sphérique, une cavité tronconique de section quadrangulaire dans laquelle est engagée l'une des extrémités de la tige centrale fixée sur le corps, de telle sorte que l'organe hémisphérique et par suite le miroir, soient guidés suivant un mouvement quadrangulaire.

6.　　Dispositif de commande suivant la revendication 4 caractérisé en ce qu'au moins l'une des gaines des câbles de transmission est en appui contre un manchon de réglage de la tension présentant une partie filetée, vissée dans un trou taraudé du corps, ledit manchon étant traversé librement par le câble de manoeuvre.

7.　　Dispositif de commande suivant la revendication 1, caractérisé en ce que les conduits de passage des câbles de manoeuvre dans le corps débouchent vers l'extérieur par des fentes longitudinales.

8.　　Dispositif de commande suivant l'une quelconque des revendications 1 à 7, caractérisé en ce que le corps cylindrique est fixé sur la tôle de cloison intérieure de la portière ou sur le panneau de portière

000784

3

par une partie méplate présentant un trou taraudé dans lequel est engagée une vis de fixation et comportant un goujon de contrage dont les axes sont perpendiculaires à l'axe longitudinal du corps.

9. Dispositif de commande suivant l'une quelconque des revendications 1 à 7, caractérisé en ce que le corps présente un prolongement tubulaire dans lequel est engagé le levier de manoeuvre et qui est lui-même monté dans un trou d'une tôle de cloison de portière sur laquelle est fixé le corps au moyen d'un écrou vissé sur une partie filetée du prolongement tubulaire, ledit prolongement tubulaire et un goujon de centrage étant disposés avec leurs axes perpendiculaires à l'axe longitudinal du corps.

10. Dispositif de commande suivant la revendication 8 caractérisé en ce qu'un soufflet en matière élastique est disposé entre le panneau de portière et le dispositif de commande.

11. Dispositif de commande suivant la revendication 10 caractérisé en ce que la partie centrale du soufflet est prolongée par une partie tubulaire qui assure le recouvrement de l'extrémité du levier de manoeuvre s'étendant à l'intérieur du véhicule.

12. Dispositif de commande suivant les revendications 1 et 3, caractérisé en ce que le corps présente deux rainures parallèles à l'axe longitudinal dudit corps et dans lesquelles sont montés pivotants et coulissants deux ergots diamétralement opposés solidaires de l'organe hémisphérique.

13. Dispositif de commande suivant la revendication 1, caractérisé en ce que le corps présente un prolongement tubulaire sur lequel est fixé un flasque enjoliveur en appui contre la garniture de portière, ledit enjoliveur présentant une rainure dont l'axe est parallèle à l'axe longitudinal du corps et dans lequel est monté coulissant et pivotant autour de son axe, le

4

levier de manoeuvre solidaire de l'organe hémisphérique de commande.

14. Dispositif suivant les revendications 1 et 13, caractérisé en ce que sur le levier de manoeuvre est calée une couronne dentée qui engrène avec des pignons satellites qui sont entraînés en rotation par un pignon planétaire solidaire d'un bouton de manoeuvre à l'intérieur duquel est monté un porte-satellite qui est solidaire de l'organe enjoliveur.

15. Dispositif suivant la revendication 2, caractérisé en ce que le porte-satellite comporte deux pattes qui sont engagées dans une rainure ménagée dans la paroi de l'enjoliveur.

16. Dispositif suivant l'une quelconque des revendications 13, 14 et 15, caractérisé en ce que l'enjoliveur est fixé notamment par clipsage sur une entretoise qui est maintenue à l'une de ses extrémités en appui contre une tôle intérieure de portière par un écrou vissé sur une partie filetée d'un prolongement latéral du corps.

FIG.1

FIG.2

**FIG. 3**

**FIG. 4**

FIG.5

FIG.6

FIG.7

FIG.8

FIG.9a

FIG.9b

FIG.9c

FIG.9d

FIG.11

FIG.10

## FIG.12

**FIG.13**

7/10

15

2

8

6

9

11

10

14

33

7

**FIG.14**

1

13

13a

9

11

10

**FIG.15**

33

1

11

22

$F_2$

A

O

B

10

FIG.16

0007849

**FIG.17**

38
37
39
40
14

XVIII

XVIII

**FIG.18**

15
37
36
40
39
14
38
35
2
XIX
XIX
8
11
9
10
1

**FIG.19**

35
2
15
8
28
36
38
39
40
1
14
9
10
29

**FIG.22**

**FIG.21**

**FIG. 20**

**Office européen des brevets**

# RAPPORT DE RECHERCHE EUROPEENNE

Numéro de la demande

**EP 79 40 0489**

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendication concernée | B 60 R 1/06 |
| | FR - A - 2 074 884 (CASCO)<br>* Revendications 1,11,14,15; figures 7,13 * | 1,6 | |
| | -- | | |
| | FR - A - 2 160 754 (CASCO)<br>* Revendications; figure 2 * | 1,6 | |
| | -- | | |
| | FR - A - 2 326 614 (LUKEY)<br>* Revendications 1,7,13,19; figures 11,12 * | 1,6 | **DOMAINES TECHNIQUES RECHERCHES (Int. Cl. 3)**<br><br>B 60 R |
| | -- | | |
| A | US - A - 3 625 085 (SHRODE)<br>* Revendication 1 * | 1 | |
| | -- | | |
| A | US - A - 3 838 608 (HARMAN)<br>* Revendication 1 * | 1 | |
| | -- | | |
| A | FR - A - 1 529 477 (LEE RADKE)<br>* Résumé * | 13 | |
| | -- | | **CATEGORIE DES DOCUMENTS CITES** |
| A | FR - A - 2 347 231 (KOOT)<br>* Figure 6 * | 14 | X: particulièrement pertinent<br>A: arrière-plan technologique<br>O: divulgation non-écrite<br>P: document intercalaire<br>T: théorie ou principe à la base de l'invention<br>E: demande faisant interférence<br>D: document cité dans la demande<br>L: document cité pour d'autres raisons |
| | ---- | | |
| | | | &: membre de la même famille. document correspondant |
| | Le présent rapport de recherche a été établi pour toutes les revendications | | |

| Lieu de la recherche | Date d'achèvement de la recherche | Examinateur |
|---|---|---|
| La Haye | 16-10-1979 | SCHMITTER |

OEB Form 1503.1   06.78